# EUROPÄISCHE PATENTSCHRIFT

(11) **EP 3 032 134 B1**
(45) Veröffentlichungstag und Bekanntmachung des Hinweises auf die Patenterteilung: **05.06.2019**
(21) Anmeldenummer: 14290376.4
(22) Anmeldetag: 10.12.2014
(51) Int. Cl.: F16F 9/04

(54) **BEFÜLLBARER BALG AUS ELASTOMEREM MATERIAL**
FILLABLE BELLOWS MADE OF ELASTOMERIC MATERIAL
SOUFFLET REMPLISSABLE EN MATÉRIAU ÉLASTOMÈRE

(43) Veröffentlichungstag der Anmeldung: 15.06.2016
(73) Patentinhaber: Contitech France, 92631 Gennevilliers Cedex (FR)
(72) Erfinder: Racine, Jerome, 95170 Gennevilliers (FR)
(74) Vertreter: Kilsch, Armin Ralph

(56) Entgegenhaltungen:
- DE-U- 1 914 391
- GB-A- 258 893
- JP-A- S56 153 134
- US-A- 2 893 665
- US-A- 4 832 317

## Beschreibung

Die Erfindung betrifft einen flexiblen, durch ein fließfähiges Medium unter Druck befüllbaren hohlen Balg aus elastomerem Material, etwa aus Gummi oder ähnlichen Werkstoffen, insbesondere einen hydraulisch oder pneumatisch betriebenen Aktuator in Form einer-Hebevorrichtung oder, einer Höheneinstellung für Lasten oder Bauteile, wobei der Balg einen Balgteil oder mehrere, ggf. durch Falten oder Wülste () gebildete benachbarte Balgteile aufweist und mit Hilfe von Anschlussteilen zwischen einer Grundplatte oder Basis und einer Last oder einem Bauteil angeordnet oder befestigt ist, wobei der Balg zwischen den Anschlussteilen ballonartig nach außen hervortritt, ggf. in Form von mehreren Falten öder Wülsten.

Solche unter Druck befüllbare Bälge sind in Form von als Hubkissen oder Hebevorrichtungen ausgebildeten Aktuatoren vielfach bekannt.

So offenbart die DE 37 43 551 A1 ein pneumatisches Hubkissen zum Anheben von Lasten, insbesondere von Kraftfahrzeugen, bestehend aus mehreren, lagenweise übereinanderliegenden, aufblasbaren Einzelelementen aus luftdicht beschichtetem Polgewebe, bei dem die als Hohlräume ausgebildeten Einzelelemente miteinander in Verbindung stehen und nur ein einziger, allen Einzelelementen gemeinsamer Anschluß für eine Luftzuführung vorgesehen ist. Die als Hohlräume ausgebildeten Einzelelemente treten an ihren Rändern in Form von Falten oder Wülsten nach außen hervor und liegen übereinander in einem Stapel. Beim Heben von Lasten können nachteiligerweise Reibungseffekte bzw. Relativbewegungen zwischen den einzelnen Elementen entstehen, welche letztlich und bei häufigem Betätigen schädigend auf die Wände der Einzelelemente wirken können.

Die DE PS 918 066 offenbarte eine Vorrichtung zur Erzeugung langsamer Bewegungen durch hydraulische Druckkörper, wobei als Druckkörper ein Sack aus wasserdichtem, elastischem Stoff abwechselnd mit Druck Wasser gefüllt und wieder entleert wird. Dabei sind die hydraulischen Druckkörper aus druckfestem, lediglich die Form änderndem Material ausgebildet. Der Druckkörper oder Kissen können ziehharmonikaartig ausgebildet und sind teilweise mit beweglichen Zwischenplatten versehen sein. Die Zwischenplatten sind hierbei eingefügt, um eine vertikale Führung, das heißt um eine Führung in Höhenrichtung bzw. Ausdehnungsrichtung zu ermöglichen.

Die DE OS 29 00 353 offenbart eine Luftkissen-Hebevorrichtung, die mindestens ein aufblasbares Kissen mit mehreren aufblasbaren Kammern aufweist und bei der durch eine Luftzuführungsvorrichtung für jedes Kissen mit einem Steuerventil das weitgehend gleichzeitigen Aufblasen aller Kammern erfolgt. Die Anordnung der Kammern ist dabei so gewählt, daß eine nur auf der Hebevorrichtung angeordnete Last während des Hebevorgangs stabil bleibt.

Die DE 37 03 593 A1 offenbart eine pneumatische Hubvorrichtung für Flugzeuge und weist ein Flugzeughebekissen auf, das aus mehreren, lagenweise übereinander angeordneten, luftdichten Kammern aufgebaut ist, die jeweils aus Abstandsfadengewebe gefertigt sind und jeweils einen Nippel für einen Luftanschluß haben und ein Steuergerät, das einen Anschluß für eine Fülleitung aufweist, eine der Anzahl der Kammern entsprechende Anzahl von Steuereinheiten für die einzelnen Kammern aufweist, die jeweils ein Steuerventil und einen Kammeranschluß haben, der über eine Schlauchleitung individuell mit der zugehörigen Kammer verbunden werden kann.

Eine weitere Hubvorrichtung ist aus GB 258 893 bekannt.

All diese Vorrichtungen besitzen den Nachteil, dass unter starker Belastung und unter der Wirkung von Querkräften auf den hohlen Balg oder das Hubkissen, einander benachbarte Wülste oder Falten entweder miteinander in Berührung und damit in einen Reibkontakt geraten oder aber mit anliegenden Anschlussteilen. So kann eine Berührung zwischen benachbarten Wülsten oder Falten insbesondere bei Mehfaltenbälgen oder bei Hubkissen für schwere Hubgüter wie Straßenbahnen oder Schienenfahrzeuge auftreten, die ja eine nur relativ geringe Einsatz- oder Einbauhöhe aufweisen dürfen. Die hier entstehende Reibpaarung kann dazu führen, dass sich die entsprechend in Kontakt stehenden Balgteile stark erwärmen und dann einem erhöhten Reibverschleiß unterworfen sind. Dies kann im Extremfall dazu führen, dass Teile der als Verstärkungselemente in der Balgwand angeordneten Gewebelagen freigelegt werden.

Für die Erfindung bestand also die Aufgabe, einen durch ein fließfähiges Medium unter Druck befüllbaren hohlen Balg aus elastomerem Material bereitzustellen, insbesondere zur Verwendung als Hubkissen oder Stellelement, bei dem das Problem des erhöhten Reibverschleißes bei hohen Belastungen und Querkräften an benachbarten Teilen/Konstruktionsteilen, Anschlussteilen oder auch Wülsten oder Falten beseitigt wird, der dabei einfach herzustellen ist und keine zusätzlichen Anforderungen an den Bauraum stellt oder größere Aufwendungen von Zusatzteilen verlangt.

Gelöst wird diese Aufgabe durch die Merkmale des Hauptanspruchs. Weitere vorteilhafte Ausbildungen sind in den Unteransprüchen offenbart.

Dabei sind zwischen einander benachbarten Balgteilen und/oder zwischen Balgteilen und Anschlussteilen Gleitelemente, insbesondere ringförmige als Gleitscheiben ausgebildete Gleitelemente angeordnet, an die sich die Balgteile bzw. Falten oder Wülste unter oder bei entsprechender Belastung der Balgluftfeder bzw. Faltenbalgluftfeder anlegen. Durch einen stark verringerten Gleitreibungskoeffizienten vermeiden solche Gleitscheiben als Gleitelemente bei relativen Bewegungen der belasteten Wülste gegeneinander oder der Balgteile gegenüber den Anschlussteilen eine Erwärmung und einen entsprechenden Verschleiß des Balgmaterials, bei Gummi einen Abbau der Gummi-Matrix.

Eine vorteilhafte Weiterbildung besteht aus diesem Grunde auch darin, dass die Gleitelemente/ ringförmigen Gleitscheiben aus einem Material bestehen, vorzugsweise aus gleitfähigem Kunststoffmaterial, welches in der Reibpaarung mit sich selbst oder mit dem Material der Balgluftfeder /Faltenbalgluftfeder einen niedrigeren Reibkoeffizienten aufweist als das Material der Balgluftfeder /Faltenbalgluftfeder in der Reibpaarung mit sich selbst oder mit dem Material der Anschlussteile.

Bei einer solchen Anordnung gleiten im wesentlichen nur noch die Gleitelement/Gleitscheiben aufeinander, wodurch die Reibung und die damit einhergehende Wärmeentwicklung stark reduziert wird, insbesondere natürlich auch dann, wenn die gleitend aufeinander angeordneten ringförmigen Gleitscheiben oder Gleitelemente aus unterschiedlichen und in ihrer Gleitfähigkeit angepassten Materialien, vorzugsweise aus gleitfähigen Kunststoffmaterialien oder auch aus unterschiedliche gleitfähigen Kunststoffmaterialien bestehen. Solche gleitfähgen Materialien , können zum Beispiel Polytetrafluorethylen (PTFE) oder hochdichtes Polyethylen (ultra-hight density Polyethylene / PE-UHMW) sein. Hierbei kann auch eine Vielzahl von Gleitelementen/Gleitscheiben eingesetzt sein, die einen schädlichen Reibkontakt zwischen den Wülsten oder Falten und einem zur Trennung der Wülsten oder Falten um den Balg gelegten Gürtel oder Stahlring verhindern.

Erfindungsgemäß ist vorgesehen, dass jeweils entweder mindestens zwei gleitend aufeinander angeordnete ringförmige Gleitscheiben oder mindestens eine Gleitscheibe und ein weiteres deckelförmiges Gleitelement zwischen Balgteilen und Anschlussteilen angeordnet sind, an die sich die Balgteile unter Belastung anlegen. Damit lassen sich insbesondere die Anschlussbereiche, d.h. die Einspannungen des Hubkissens oder Balgs sicher gegen zu hohe Wärmebelastung durch Reibung beim Anlegen der nach außen hervortretenden Balgfalten an die Anschlussteile schützen.

Erfindungsgemäß ist vorgesehen, dass die gleitend aufeinander angeordneten ringförmigen Gleitscheiben oder Gleitelemente radial gegeneinander oder gegeneinander drehend gleitbeweglich angeordnet sind, so dass auch auf ein Hubkissen oder Balg/Stellbalg einwirkende starke oder gar oszillierende Querkräfte und Drehbewegungen oder ein auf den Balg einwirkende Drehmoment nicht zu Wärmebelastungen durch Reibung führen.

Eine weitere vorteilhafte Ausbildung besteht darin, dass die ringförmigen Gleitscheiben oder Gleitelemente asymmetrisch ausgebildet sind und mindestens in einem Kreissegment weitere Balgbereiche bedecken. Das verhindert z. B. im mittleren Bereich einer Balgwulst, also entfernt von den Anschlussteilen, bei Belastungen ein Anlegen der Balgluftfeder an umgebende Bauteile, beispielsweise andere Fahrwerksbauteile, so dass auch hier keine Wärmebelastung durch Reibung entstehen kann.

Unterstützt wird die Verminderung unerwünschter Reibung durch weitere vorteilhafte Ausbildungen, die darin bestehen, dass die ringförmigen Gleitscheiben oder Gleitelemente im Querschnitt konkav oder konvex ausgebildet sind und/oder dass die ringförmigen Gleitscheiben oder Gleitelemente so flexibel ausgebildet sind, dass sie sich unter Belastung der Faltenbalgluftfeder an die Balgbereiche anlegen.

Einsetzen lässt eine solche erfindungsgemäße Balgluftfeder besonders gut als Stellmittel zur Höheneinstellung eines Fahrzeugfahrwerks, insbesondere eines Schienenfahrzeugs oder eines Kraftfahrzeugs verwenden, bei dem hohe statische und dynamische Traglasten und große Querkräfte wirken. Dasselbe gilt für die Verwendung als Stellmittel für die Höheneinstellung von Maschinen oder Vorrichtungen im industriellen Bereich. Natürlich ist der erfindungsgemäße durch ein fließfähiges Medium unter Druck befüllbare hohlen Balg ebenso geeignet als Hubkissen im industriellen Anwendungsbereich geeignet, z.B. zur Montage von Maschinen, zum Heben von Bahnen oder Lokomotiven beim Fahrwerkswechsel etc.

Anhand eines Ausführungsbeispiels soll die Erfindung näher erläutert Werden. Es zeigen
- Fig. 1: einen flexiblen, unter Druck befüllbaren und als hydraulisches Hubkissen für LKW ausgebildeten erfindungsgemäßen Balg
- Fig. 2: Eine weitere Ausführung eines Balgs gemäß Fig. 1 mit angepassten Gleitscheiben

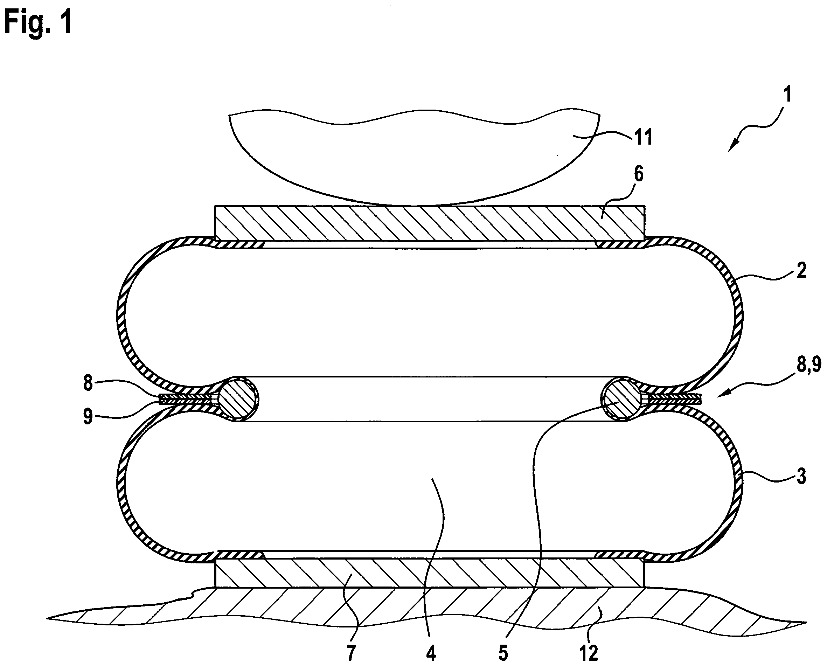

Die Fig. 1 zeigt einen flexiblen, unter Druck befüllbaren und als hydraulisches Hubkissen 1 für LKW ausgebildeten hohlen Balg 4 aus elastomerem Material, hier aus Gummi mit eingebetteten Verstärkungsfäden/Corden. Der Balg 4 besteht aus zwei als Falte oder Wulst 2 und 3 ausgebildeten Balgteilen, die durch einen um den Balg gelegten Metallring 5 getrennt sind und somit zwei ballonartig rechts und links des Metallrings 5 nach außen hervortretende Balgbereiche bilden.

Die Hebevorrichtung/das Hubkissen 1 ist mit Basis- und Deckelteilen ausgebildet, nämlich ausgebildet als Auflageplatte 6 und Bodenplatte 7, so dass die zu bewegende/zu hebende Masse, hier ein nicht weiter dargestellter und mit einem Teil seiner Bodengruppe 11 auf die Auflageplatte 6 aufgelegter Lkw, durch Befüllung des Balgs 4 angehoben werden kann, wobei die Bodenplatte 7 auf einer geeigneten Unterlage 12 positioniert wird. Die Befüllung erfolgt in diesem Fall über nicht weiter dargestellte Zuleitungen mithilfe von Wasser als hydraulischem Medium.

Zwischen den einander benachbarten Balgteilen 2 und 3 sind zwei ringförmige Gleitscheiben 8 und 9 aus Kunststoff, nämlich PE-UHMW, als Gleitelemente angeordnet, an die sich die Balgteile unter Belastung des Hubkissens anlegen können. Bei einer entsprechenden Auslegung der Reibpaarung zwischen dem Material des Balgs 4, d.h. zwischen dem Material der Wülste 2, 3 und dem verwendeten Kunststoff, kann es auch ausreichen, dass nur eine Gleitscheibe 8 zwischen die Wülste gelegt wird, die mit ihrer Oberseite an der Wulst 2 anliegt und mit ihrer Unterseite an der Wulst 3.

Die zwei gleitend aufeinander angeordneten ringförmigen Gleitscheiben 8 und 9 bestehen aus PE-UHMW, einem extrem gleitfähigem Kunststoffmaterial, welches sowohl in der Reibpaarung mit sich selbst oder mit dem Material des Balgs einen wesentlich niedrigeren Reibkoeffizienten aufweist als das Material des Hubkissens in der Reibpaarung mit sich selbst. Der Innendurchmesser der Gleitscheiben 8 und 9 ist dabei größer ist als der Außendurchmesser eines Metallrings 5, der hier zur Stabilisierung zwischen den benachbarten Falten oder Wülsten 2 und 3 angeordnet ist.

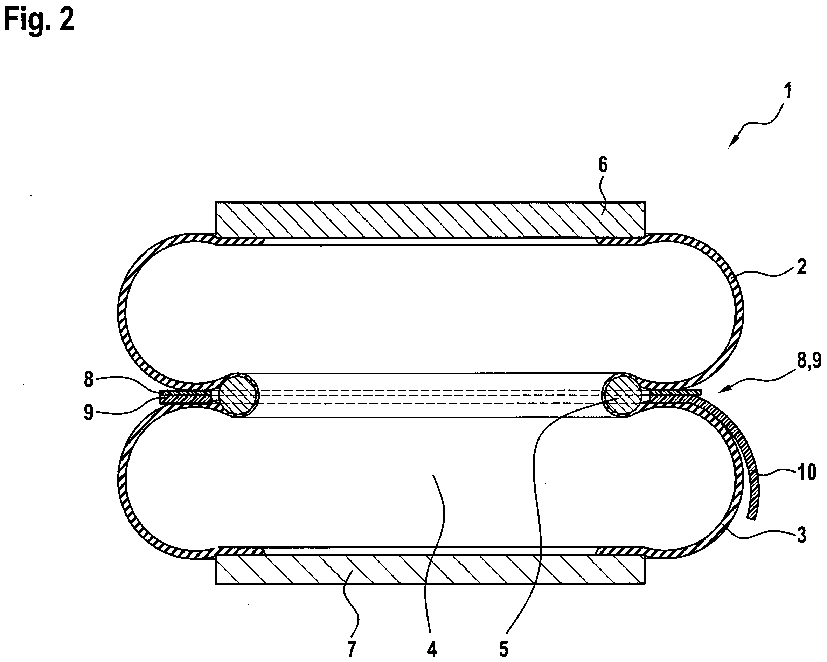

Fig. 2 zeigt eine Ausführung des erfindungsgemäßen Hubkissens 1, bei der die ringförmigen Gleitscheiben 8 und 9 asymmetrisch und aus unterschiedlichen Kunststoffen ausgebildet sind. Die untere Gleitscheibe 9 ist über ein in der Fig. 2 rechts liegendes Kreissegment mit eine Zunge 10 ausgebildet, die einen sich nach unten erstreckenden Balgbereiche der Faltenbalgluftfeder bedeckt. Das verhindert Beschädigungen des Balgs 4, falls ein Einsatz unter beengten Verhältnissen notwendig wird.

Ein solcher flexibler, durch ein fließfähiges Medium unter Druck befüllbarer hohler Balg aus elastomerem Material kann natürlich auch als fest eingebautes Bauteil, beispielsweise in Schienenfahrzeugen, eingesetzt werden, um die Höhe des Wagenkastens einzustellen bzw. um den Wagenkasten an Haltestellen/Haltepunkten auf das Niveau der Bahnsteigkante anzuheben oder abzusenken. Solche fest eingebauten Bauteile könnten zum Beispiel mit Hydrauliköl befüllt werden und in den Abmessungen so angepasst sein, dass die normale Höhenregulierung bzw. Federung damit unterstützt werden kann.

Auf diese Weise sind mit fest eingebauten unter Druck befüllbarer hohlen Bälgen aus elastomerem Material auch weitere Anwendungen denkbar, etwa in der Höhenjustierung von LKW-Ladeflächen oder Lkw-Anhängern.

Natürlich lassen sich auch, bei etwas andere Befestigungssituation zwischen Auflageplatte 6, Bodenplatte 7 und dem Balg 4 bzw. den Wülsten 2 und 3, solche Gleitscheiben zwischen den Wülsten 2, 3 und den entsprechenden Anschlussteilen, d.h. Auflageplatte und Bodenplatte anordnen.

### Bezugszeichenliste

### (Teil der Beschreibung)

- 1: Hubkissen
- 2: Wulst/Falte
- 3: Wulst/Falte
- 4: Hohler Balg
- 5: Metallring/Trennring
- 6: Auflageplatte
- 7: Bodenplatte
- 8: Gleitscheibe/Gleitelement
- 9: Gleitscheibe/Gleitelement
- 10: Zunge an der Gleitscheibe
- 11: Bodengruppe eines LKW
- 12: Unterlage

## Patentansprüche

1. Flexibler, durch ein fließfähiges Medium unter Druck befüllbarer hohler Balg (4) aus elastomerem Material, ausgebildet als hydraulisches oder pneumatisches Hubkissen oder Stellelement (1), wobei der Balg mehrere, durch Falten oder Wülste (2, 3) gebildete benachbarte Balgteile aufweist und mit Hilfe von Anschlussteilen zwischen einer Grund- bzw. Bodenplatte (12) und einer Last oder einem Bauteil (11) angeordnet oder befestigt ist, wobei die Falten oder Wülste (2, 3) durch einen um den Balg gelegten und die Falten oder Wülste trennenden Gürtel oder Ring (5) ausgebildet werden und ballonartig nach außen hervortreten, **dadurch gekennzeichnet, dass** zwischen einander benachbarten Falten oder Wülste (2, 3) und/oder zwischen Falten oder Wülste (2, 3) und Anschlussteilen jeweils mindestens zwei gleitend aufeinander angeordnete ringförmige Gleitelemente, insbesondere als Gleitscheiben (8, 9) ausgebildete Gleitelemente angeordnet sind, die sich unter Belastung aneinander anlegen und an die sich die Falten oder Wülste unter Belastung des flexiblen Balgs (4) anlegen, wobei die gleitend aufeinander angeordneten ringförmigen Gleitscheiben oder Gleitelemente (8, 9) radial gegeneinander oder gegeneinander drehend gleitbeweglich angeordnet sind.

2. Flexibler Balg nach Anspruch 1, bei dem die Gleitelemente oder ringförmigen Gleitscheiben (8, 9) aus einem Material bestehen, vorzugsweise aus gleitfähigem Kunststoffmaterial, welches in der Reibpaarung mit sich selbst oder mit dem Material der Balgluftfeder einen niedrigeren Reibkoeffizienten aufweist als das Material der Balgluftfeder in der Reibpaarung mit sich selbst oder mit dem Material der Anschlussteile.

3. Flexibler Balg nach einem der Ansprüche 1 oder 2, bei der die gleitend aufeinander angeordneten ringförmigen Gleitscheiben oder Gleitelemente (8, 9) aus unterschiedlichen Materialien, vorzugsweise aus unterschiedlichen gleitfähigen Kunststoffmaterialien bestehen.

4. Flexibler Balg nach einem der Ansprüche 1 bis 3, bei der die ringförmigen Gleitscheiben oder Gleitelemente (8, 9) asymmetrisch ausgebildet sind und mindestens in einem Kreissegment durch eine Zunge (10) weitere Balgbereiche bedecken.

5. Flexibler Balg nach einem der Ansprüche 1 bis 4, bei der die ringförmigen Gleitscheiben oder Gleitelemente (8, 9) im Querschnitt konkav oder konvex ausgebildet sind.

6. Verwendung eines flexiblen Balgs nach einem der Ansprüche 1 bis 5 zur Höheneinstellung eines Fahrzeugfahrwerks, insbesondere eines Schienenfahrzeugs oder eines Kraftfahrzeugs.

## Claims

1. Flexible hollow bellows (4) of an elastomeric material, which is fillable under pressure by way of a free-flowing medium, configured as a hydraulic or pneumatic lifting cushion or adjustment element (1), wherein the bellows displays a plurality of adjacent bellows parts which are formed by folds or bulges (2, 3) and is disposed or fastened with the aid of connection parts between a ground plate or base plate (12), respectively, and a load or a component (11), wherein the folds or bulges (2, 3) are configured by a belt or ring (5) which is placed around the bellows and separates the folds or bulges which protrude outwardly in the manner of a balloon, **characterized in that** in each case at least two annular sliding elements which are disposed so as to slide on top of one another, in particular sliding elements which are configured as sliding discs (8, 9) which bear on one another under load and on which the folds or bulges bear when the flexible bellows (4) is under load, are disposed between mutually adjacent folds or bulges (2, 3) and/or between folds or bulges (2, 3), and connection parts wherein the annular sliding discs or sliding elements (8, 9) which are disposed so as to slide on top of one another are disposed so as to slide radially or rotatingly in relation to one another.

2. Flexible bellows according to Claim 1, in which the sliding elements or annular sliding discs (8, 9) are composed of a material, preferably of a slidable plastic material, which when frictionally paired with itself or with the material of the bellows air spring displays a lower coefficient of friction than the material of the bellows air spring when frictionally paired with itself or with the material of the connection parts.

3. Flexible bellows according to one of Claims 1 and 2, in which the annular sliding discs or sliding elements (8, 9) which are disposed so as to slide on top of one another are composed of different materials, preferably of various slidable plastic materials.

4. Flexible bellows according to one of Claims 1 to 3, in which the annular sliding discs or sliding elements (8, 9) are configured so as to be asymmetrical and, at least in one segment of a circle, cover further bellows regions by way of a tongue (10).

5. Flexible bellows according to one of Claims 1 to 4, in which the annular sliding discs or sliding elements (8, 9) in the cross section are configured so as to be concave or convex.

6. Use of a flexible bellows according to one of Claims 1 to 5, for the height adjustment of a vehicle running gear, in particular of a rail vehicle or of a motor vehicle.

## Revendications

1. Soufflet creux flexible (4) apte à être rempli d'un fluide sous pression, configuré comme coussin de levage hydraulique ou pneumatique ou comme élément de positionnement (1),
le soufflet présentant plusieurs parties voisines formées par des plis ou bourrelets (2, 3) et étant disposé ou fixé à l'aide de parties de raccordement entre une plaque de sol ou de fond (12) et une charge ou un composant (11),
les plis ou bourrelets (2, 3) étant formés par une ceinture ou un anneau (5) placés autour du soufflet et séparant les plis ou bourrelets et débordant en ballon vers l'extérieur,
**caractérisé en ce que**
au moins deux éléments coulissants de forme annulaire glissant l'un sur l'autre, en particulier des éléments coulissants configurés comme disques coulissants (8, 9), reposant l'un sur l'autre en charge et sur lesquels les plis ou bourrelets reposent lorsque le soufflet flexible (4) est en charge sont disposés entre des plis ou bourrelets (2, 3) voisins l'un de l'autre et/ou entre des plis ou bourrelets (2, 3) et des parties de raccordement,
les disques coulissants ou éléments coulissants (8, 9) annulaires disposés à coulissement l'un sur l'autre sont disposés à coulissement radial ou rotatif l'un par rapport à l'autre.

2. Soufflet flexible selon la revendication 1, dans lequel les disques coulissants ou éléments coulissants (8, 9) annulaires sont constitués d'un matériau, de préférence une matière synthétique glissante, qui présente un appariement en frottement avec lui-même ou le matériau du soufflet d'amortissement pneumatique dont le coefficient de frottement est plus bas que celui du matériau du soufflet d'amortissement pneumatique avec lui-même ou avec le matériau des parties de raccordement.

3. Soufflet flexible selon l'une des revendications 1 ou 2, dans lequel les disques coulissants ou éléments coulissants (8, 9) annulaires disposés à coulissement l'un sur l'autre sont constitués de matériaux différents et de préférence de matières synthétiques glissantes différentes.

4. Soufflet flexible selon l'une des revendications 1 à 3, dans lequel les disques coulissants ou éléments coulissants (8, 9) annulaires sont de configuration asymétrique et recouvrent d'autres parties du soufflet par une languette (10) au moins dans un segment de cercle.

5. Soufflet flexible selon l'une des revendications 1 à 3, dans lequel les disques coulissants ou éléments coulissants (8, 9) annulaires sont de configuration concave ou convexe en coupe transversale.

6. Utilisation d'un soufflet flexible selon l'une des revendications 1 à 5 pour l'ajustement en hauteur du châssis d'un véhicule, notamment d'un véhicule ferroviaire ou d'un véhicule automobile.
